# EUROPEAN PATENT SPECIFICATION

(11) **EP 3 561 244 B1**
(45) Date of publication and mention of the grant of the patent: **23.06.2021**
(21) Application number: 19168065.1
(22) Date of filing: 09.04.2019
(51) Int. Cl.: F01M 1/06, F02B 61/02, F16C 3/10, F16C 3/14

(54) **SINGLE-CYLINDER INTERNAL-COMBUSTION ENGINE AND STRADDLED VEHICLE INCLUDING THE SAME**
EINZYLINDRIGER VERBRENNUNGSMOTOR UND GRÄTSCHSITZFAHRZEUG DAMIT
MOTEUR MONOCYLINDRE À COMBUSTION INTERNE ET VÉHICULE À ENFOURCHER COMPRENANT CELUI-CI

(30) Priority: 24.04.2018 JP 2018083113
(43) Date of publication of application: 30.10.2019
(73) Proprietor: YAMAHA HATSUDOKI KABUSHIKI KAISHA, Iwata-shi, Shizuoka 438-8501 (JP)
(72) Inventor: OGA, Hirotsugu, Iwata-shi, Shizuoka 438-8501 (JP); FUKUSHIGE, Takahiro, Iwata-shi, Shizuoka 438-8501 (JP)
(74) Representative: Grünecker Patent- und Rechtsanwälte PartG mbB

(56) References cited:
- EP-A1- 2 942 536
- DE-A1-102010 050 621
- GB-A- 2 103 302
- JP-A- H0 727 127
- JP-A- 2018 159 413
- JP-U- S58 119 618
- US-A- 4 343 377

## Description

The present invention relates to a single-cylinder internal-combustion engine according to the preamble of the independent claim 1 and a straddled vehicle including the same. Such a single-cylinder internal-combustion engine can be taken from the prior art document DE 10 2010 050621 A1.

Conventionally, internal-combustion engines which include a crankshaft including a first crank web, a second crank web, and a crank pin that connects the first crank web and the second crank web have been known. For example, in International Publication No. WO2005-068872, a crankshaft (which will be hereinafter referred to as an "integrally formed crankshaft") in which a first crank web, a second crank web, and a crank pin are integrally formed is described. A large end portion of a connecting rod is rotatably connected to the crank pin via a bearing.

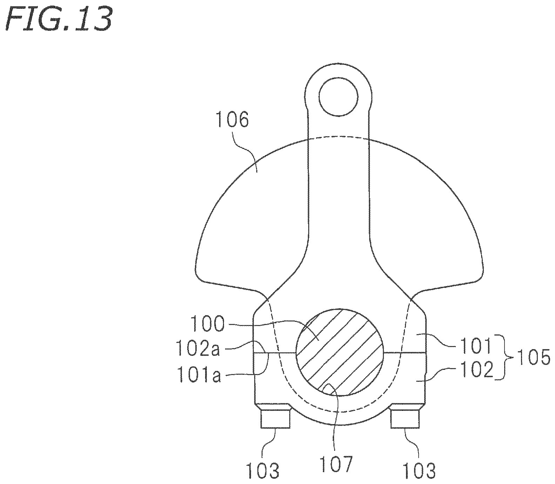

In a case in which the large end portion of the connecting rod is connected to the integrally formed crankshaft, the crank pin cannot be inserted in the large end portion of the connecting rod along an axial direction of the crank pin. Therefore, as illustrated in FIG. 13, a connecting rod in which a large end portion 105 is formed of two parts 101 and 102 is connected to a crank pin 100 of an integrally formed crankshaft. The part 101 and the part 102 are arranged with the crank pin 100 sandwiched between the part 101 and the part 102 and are fixed by a bolt 103. Note that the reference sign 106 denotes a crank web.

In the above described connecting rod, when the part 101 and the part 102 are combined, a high degree of roundness with high accuracy is required for a hole 107 of the large end portion 105. Therefore, the part 101 and the part 102 have to be processed with high accuracy in advance. Also, when the part 101 and the part 102 are combined, a contact surface 101a of the part 101 and a contact surface 102a of the part 102 have to be accurately matched and high assembling accuracy is required. Therefore, as compared to a case in which a connecting rod in which a large end portion is integrally formed is used, more time and costs are required for manufacturing an internal-combustion engine. Also, in the above described connecting rod, a portion in which the bolt 103 is inserted has to be formed in each of the part 101 and the part 102. Therefore, the large end portion 105 is increased in size and becomes heavier JP H07 27127 A discloses the lubrication of a crankshaft of a multi-cylinder engine comprising a plurality of inlet ports.

JP 2015-212531 A discloses a single-cylinder internal-combustion engine. Normally, a maximum torque of a single-cylinder internal-combustion engine is smaller than a maximum torque of a multi-cylinder internal-combustion engine, and therefore, a load applied on a crankshaft of the single-cylinder internal-combustion engine is small. Therefore, in the crankshaft of the single-cylinder internal-combustion engine, a first crank web, a second crank web, and a crank pin can be formed as separate bodies. In the crankshaft (which will be hereinafter referred to as a "separate body crankshaft") in which the first crank web, the second crank web, and the crank pin are separate bodies, the crank pin may be inserted in a large end portion of a connecting rod in assembling, and therefore, the connecting rod in which the large end portion is integrally formed can be used. Also, the crankshaft can be assembled by pressing the crank pin in the first crank web and the second crank web. Assembling an internal-combustion engine including a separate crankshaft is easier than assembling an internal-combustion engine including an integrally formed crankshaft. Therefore, with the internal-combustion engine including a separate crankshaft, manufacturing is easy and time and costs required for manufacturing can be reduced. Also, the above described bolt 103 (see FIG. 13) is not needed, and therefore, the size and weight of the large end portion of the connecting rod can be reduced.

In the internal-combustion engine disclosed in JP 2015-212531 A, as a bearing that exists between the large end portion of the connecting rod and the crank pin, a rolling bearing is provided. An oil passage that extends in the axial direction and a hole that extends in a radial direction are formed inside the crank pin. A lubricant is supplied from an oil passage that is formed in a portion of a crank case which is in a vicinity of a cylinder to the above described oil passage of the crank pin and is supplied to the above described rolling bearing from the oil passage via the hole.

It has been considered reducing, in a single-cylinder internal-combustion engine, noise caused by a bearing that exists between a large end portion of a connection rod and a crank pin while ensuring easiness of assembling. In this case, in the single-cylinder internal-combustion engine, as output per cylinder, large and stable output is required. In order to reduce noise, a sufficient amount of a lubricant is needed to be stably supplied to the above described bearing.

It is an object of the present invention to provide a single-cylinder internal-combustion engine that can be easily assembled and has less noise and a straddled vehicle including the single-cylinder internal-combustion engine. According to the present invention said object is solved by a single-cylinder internal-combustion engine having the features of independent claim 1. Preferred embodiments are laid down in the dependent claims.

A single-cylinder internal-combustion engine disclosed herein includes a crankshaft and a connecting rod. The crankshaft includes a first part and a second part. The first part is formed by integrally forming a first crank web, a crank pin that extends from the first crank web, and a first shaft that is arranged in an opposite side to the crank pin with respect to the first crank web and extends from the first crank web. The second part is formed by integrally forming a second crank web in which a pin hole in which the crank pin of the first part is pressed is formed and a second shaft that is arranged in an opposite side to the first crank web with respect to the second crank web and extends from the second crank web. In the first part, an oil passage that passes inside the crank pin and inside the first crank web and has an outlet port formed in an outer peripheral surface of the crank pin is formed. When viewed from a direction that is perpendicular to a plane including an axis of the crank pin and an axis of the first shaft, the oil passage has a passage portion that overlaps the axis of the first shaft. A connecting rod has a large end portion in which a hole in which the crank pin is inserted and at least a peripheral portion of the hole of the large end portion is integrally formed. The internal-combustion engine includes a bearing that is arranged inside the hole of the large end portion of the connecting rod and exists between the large end portion of the connecting rod and the crank pin.

With the above described internal-combustion engine, the crankshaft and the connecting rod can be assembled by inserting the crank pin of the first part in the hole of the large end portion of the connecting rod and the pin hole of the second part in order. Thus, the connecting rod in which the peripheral portion of the hole of the large end portion is integrally formed can be used. Therefore, assembling is easy. Also, it is possible to reduce the size and weight of the large end portion of the connecting rod.

Moreover, with the above described internal-combustion engine, when viewed from the direction that is perpendicular to the plane including the axis of the crank pin and the axis of the first shaft, the oil passage has a passage portion that overlaps the axis of the first shaft. In this case, the first crank web and the crank pin are formed as an integrated piece. Therefore, the oil passage that extends from the inside of the first crank web to the inside of the crank pin can be easily processed. Also, the first crank web and the crank pin are formed as an integrated piece, and therefore, there is no boundary between the first crank web and the crank pin. Thus, it is possible to smoothly supply a necessary lubricant to the bearing through the oil passage. Therefore, noise caused by the bearing that exists between the large end portion of the connecting rod and the crank pin can be reduced.

Based on the foregoing, with the internal-combustion engine, both of assembly easiness and quietness can be achieved.

According to the present invention, the bearing is a sliding bearing.

The sliding bearing has less noise, as compared to a rolling bearing, but has a characteristic that a lubricant has to be more stably supplied. However, in the internal-combustion engine, a sufficient amount of a lubricant can be smoothly supplied to the bearing. Accordingly, as the bearing, a sliding bearing can be used. The above described internal-combustion engine includes, as the bearing that exists between the large end portion of the connecting rod and the crank pin, a sliding bearing, and therefore, noise can be reduced. Also, the crank pin that contacts the sliding bearing is integrally formed with the first crank web, and therefore, has high rigidity. The large end portion of the connecting rod can be stably supported via the sliding bearing, and therefore, noise can be further reduced.

According to one preferred embodiment, when viewed from the direction that is perpendicular to the plane including the axis of the crank pin and the axis of the first shaft, the oil passage has an inlet port at least a portion of which is arranged in an opposite side to an outlet port with respect to the axis of the first shaft.

According to the above described embodiment, in a radial direction of the first shaft, the lubricant can be introduced from a position that is relatively far from the outlet port to the oil passage.

According to the present invention, the inlet port is formed in an outer peripheral surface of the first shaft. The oil passage is formed of an inclined passage that is inclined with respect to the axis of the first shaft.

According to the above described embodiment, the oil passage can be relatively easily processed.

According to the present invention, the first shaft includes a journal portion. The internal-combustion engine includes another sliding bearing that rotatably supports the journal portion. The inlet port of the oil passage is formed in the outer peripheral surface of the journal portion.

According to the above described embodiment, the lubricant can be supplied to the another sliding bearing and the bearing in this order.

According to one preferred embodiment, the outlet port is formed in the crank pin and is located in an intermediate position of the bearing in a direction along the axis of the crank pin. The inclined passage includes a first inclined passage and a second inclined passage that is inclined with respect to the first inclined passage.

According to the above described embodiment, the outlet port of the oil passage is formed in the intermediate position, and therefore, the lubricant can be stably supplied to the entire bearing. Incidentally, depending on shapes and dimensions of the first shaft, the first crank web, and the crank pin, there is a case in which the outlet port that is formed in the intermediate position of the bearing cannot be straightly connected to the inlet port by a single inclined passage. However, according to the above described embodiment, the inclined passage includes the first inclined passage and the second inclined passage, and therefore, the inlet port and the output port can be well connected. Therefore, the lubricant can be stably supplied to the bearing.

According to one preferred embodiment, when viewed from the direction that is perpendicular to the plane including the axis of the first shaft and the axis of the crank pin, a projecting portion that projects toward the first crank web is formed in a position that is distant from the crank pin in a plane of the second crank web, which faces the first crank web.

Each of the first crank web and the second crank web is configured such that, in order to reduce an inertia force that is generated by movement of a piston and the connecting rod, a weight balance is uneven so that a weight of a portion located distant from the crank pin is large. According to the above described embodiment, even without increasing a width of a portion that is distant from the crank pin of the second crank web, necessary imbalance for the second crank web can be ensured by the projecting portion. Therefore, a size of the crankshaft can be reduced. Also, before assembling the first part and the second part, the first crank web and the second crank web do not face to one another, and therefore, even with the projecting portion, polishing processing for the crank pin or the like can be easily performed.

A straddled vehicle disclosed herein is a straddled vehicle including the above described internal-combustion engine.

According to one preferred embodiment, the straddled vehicle includes a transmission connected to the first shaft.

According to one preferred embodiment, the straddled vehicle includes a generator connected to the first shaft.

According to one preferred embodiment, the straddled vehicle includes a belt type continuously variable transmission connected to the second shaft.

### EFFECTS OF THE INVENTION

According to the present teaching, a single-cylinder internal-combustion engine that can be easily assembled and has less noise and a straddled vehicle including the single-cylinder internal-combustion engine can be provided.

### BRIEF DESCRIPTION OF THE DRAWINGS

FIG. 1 is a side view of a motorcycle according to a first embodiment as a comparative example provided to explain selected features of the present invention.
FIG. 2 is a partial cross-sectional view of a power unit according to the first embodiment.
FIG. 3 is a front view of a connecting rod.
FIG. 4 is an exploded perspective view of a crankshaft according to the first embodiment.
FIG. 5 is a side view of a crankshaft according to the first embodiment.
FIG. 6 is a view of a first part of a crankshaft according to the first embodiment when viewed from the left.
FIG. 7A is a view illustrating how polishing processing is performed on a crank pin of an integrally formed crankshaft.
FIG. 7B is a view illustrating how polishing processing is performed on a crank pin of a crankshaft according to the first embodiment.
FIG. 8 is a partial cross-sectional view of a power unit according to a second embodiment that illustrates the entire combination of the features of the independent claim.
FIG. 9 is an exploded perspective view of a crankshaft according to the second embodiment.
FIG. 10 is a side view of a crankshaft according to the second embodiment.
FIG. 11 is an enlarged partial side view of a crankshaft according to the second embodiment.
FIG. 12 is a view of a first part of a crankshaft according to the second embodiment when viewed from the right.
FIG. 13 is a front view of a connecting rod that is connected to an integrally formed crankshaft in a known internal-combustion engine.

### DETAILED DESCRIPTION OF THE PREFERRED EMBODIMENTS

### (First Embodiment)

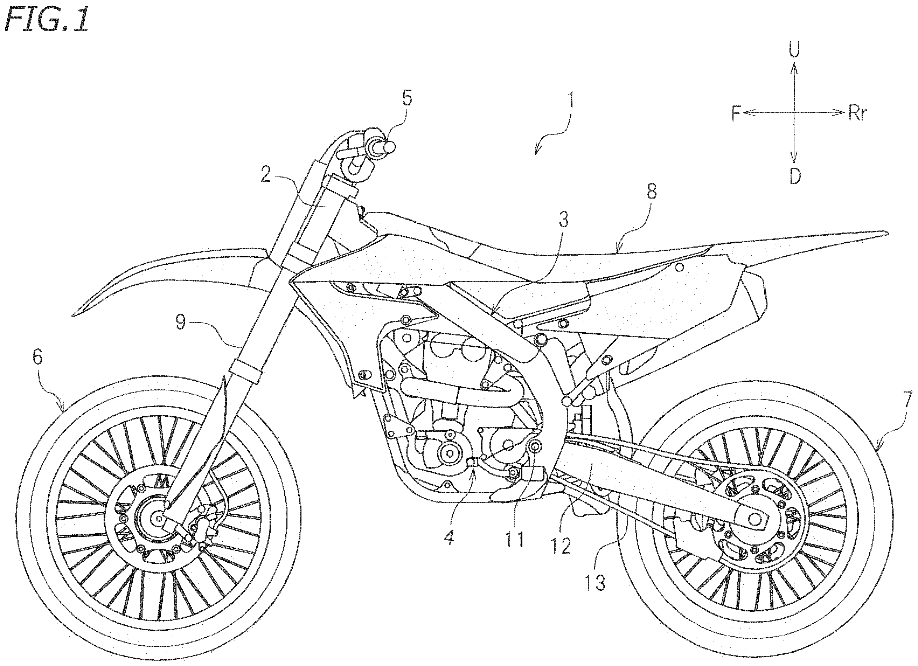

With reference to the attached drawings, embodiments of the present teaching will be described below. FIG. 1 is a side view of a motorcycle 1 that is an example of a straddled vehicle.

In the following description, for convenience sake, front, rear, left, right, up, and down mean front, rear, left, right, up, and down, when viewed from a virtual rider who sits on a seat 8 of the motorcycle 1 in a state in which the rider is not on the motorcycle 1, a fuel is not filled, and no load is on the motorcycle 1, respectively. Reference signs F, Rr, L, R, U, and D denote front, rear, left, right, up, and down in the drawings, respectively.

The motorcycle 1 includes a body frame 3 including a head pipe 2, a power unit 4 supported by the body frame 3, a seat 8 supported by the body frame 3, a front wheel 6, and a rear wheel 7. A steering shaft (not illustrated) is inserted in the head pipe 2 so as to be rotatable in a left-right direction. A handle 5 is fixed to an upper part of the steering shaft. A front fork 9 is fixed to a lower part of the steering shaft. The front wheel 6 is rotatably supported by a lower end portion of the front fork 9. A front end portion of a rear arm 12 is swingably supported by the body frame 3 via a pivot shaft 11. The rear wheel 7 is rotatably supported by a rear end portion of the rear arm 12. The power unit 4 and the rear wheel 7 are connected to one another by a chain 13.

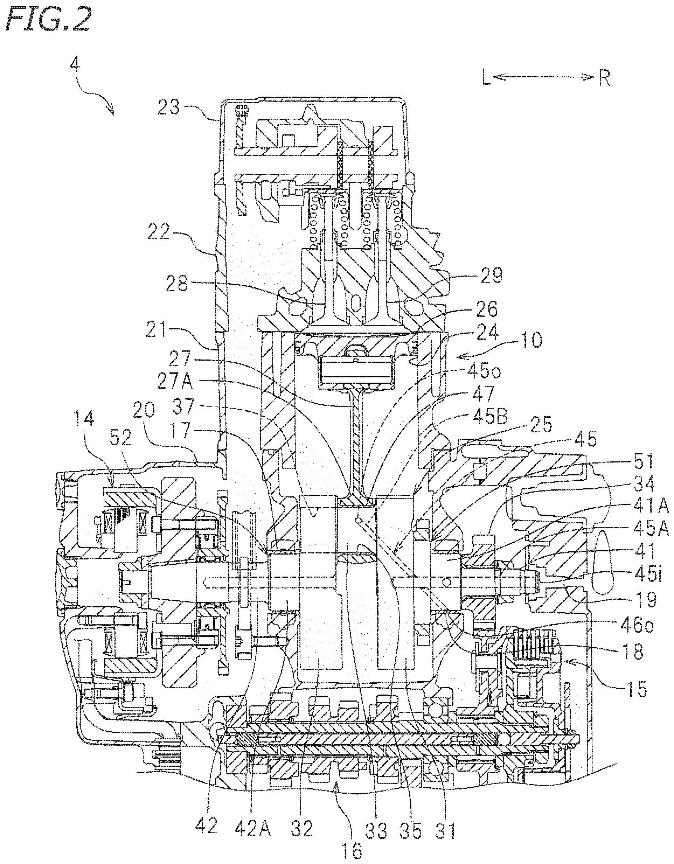

FIG. 2 is a cross-sectional view of the power unit 4. The power unit 4 includes a single-cylinder internal-combustion engine 10. Also, the power unit 4 includes a generator 14, a clutch 15, and a transmission 16.

The internal-combustion engine 10 includes a crank case 20, a cylinder body 21 that is connected to the crank case 20, a cylinder head 22 that is connected to the cylinder body 21, and a cylinder head cover 23 that is connected to the cylinder head 22. The cylinder body 21 includes a single cylinder 24. The internal-combustion engine 10 includes only one cylinder 24.

The internal-combustion engine 10 includes a crankshaft 25 that is rotatably supported by the crank case 20 via bearings 17, 18, a piston 26 housed in the cylinder 24, and a connecting rod 27 that connects the crankshaft 25 and the piston 26. The internal-combustion engine 10 is a four-cycle engine. The cylinder head 22 is provided with an intake valve 28, an exhaust valve 29, and an ignition device that is not illustrated.

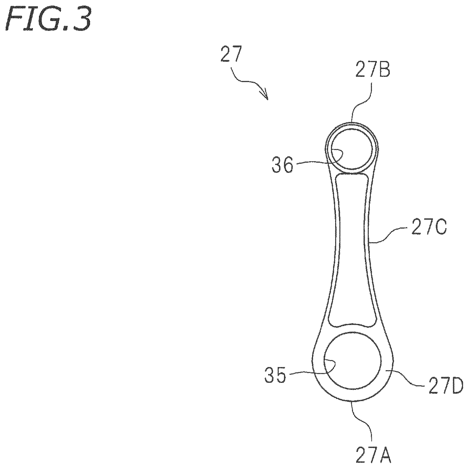

As illustrated in FIG. 3, the connecting rod 27 includes a large end portion 27A in which a hole 35 is formed, a small end portion 27B in which a hole 36 is formed, and a connecting portion 27C that connects the large end portion 27A and the small end portion 27B. In the connecting rod 27 according to this embodiment, the large end portion 27A, the connecting portion 27C, and the small end portion 27B are integrally formed. That is, the connecting rod 27 is a single part which is integrally formed. A peripheral portion 27D that surrounds the entire circumference of the hole 35 of the large end portion 27A is integrally formed. There is no joint in the peripheral portion 27D of the hole 35 of the large end portion 27A.

As illustrated in FIG. 2, the crankshaft 25 includes a first crank web 31, a second crank web 32, a crank pin 33, a first shaft 41, and a second shaft 42. The first shaft 41 extends rightward from the first crank web 31. The crank pin 33 extends leftward from the first crank web 31. The first shaft 41 is arranged in an opposite side to the crank pin 33 with respect to the first crank web 31. The second shaft 42 extends leftward from the second crank web 32.

The first shaft 41 is connected to the clutch 15 via a gear 34. The clutch 15 is connected to the transmission 16. In this case, the first shaft 41 and the transmission 16 are indirectly connected to one another. The transmission 16 is a stage transmission including a plurality of gears and is configured such that a transmission gear ratio can be changed by changing a combination of gears that mesh with one another. The transmission 16 is a so-called dog clutch transmission. However, there is no particular limitation on a configuration of the transmission 16. The generator 14 is connected to the second shaft 42. In this case, the generator 14 is directly connected to the second shaft 42.

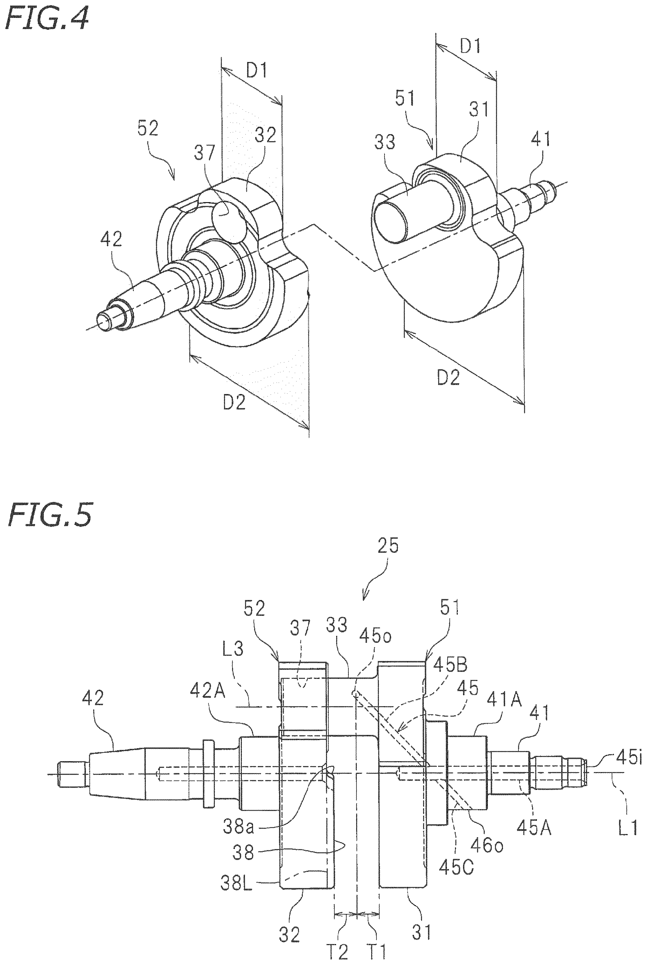

As illustrated in FIG. 4, the crankshaft 25 includes a first part 51 and a second part 52. Each of the first part 51 and the second part 52 is a single part which is integrally formed. The first part 51 includes a first shaft 41, a first crank web 31, and a crank pin 33. The first shaft 41, the first crank web 31, and the crank pin 33 are integrally formed. The second part 52 includes a second shaft 42 and a second crank web 32. The second shaft 42 and the second crank web 32 are integrally formed.

A pin hole 37 in which the crank pin 33 is pressed is formed in the second crank web 32. Such a pin hole in which the crank pin 33 is pressed is not formed in the first crank web 31. The crank pin 33 of the first part 51 is pressed in the pin hole 37 of the second part 52, and thereby, the first part 51 and the second part 52 are assembled.

FIG. 5 is a side view of the crankshaft 25. Specifically, FIG. 5 is a view of the crankshaft 25 in a direction perpendicular to a plane including an axis L3 of the crank pin 33 and an axis L1 of the first shaft 41. As illustrated in FIG. 5, a projecting portion 38 that projects toward the first crank web 31 is formed in a plane of the second crank web 32, which faces the first crank web 31. A step portion 38a is formed on a boundary of the projecting portion 38. Note that a virtual line 38L in FIG. 5 is a line that indicates the plane of the second crank web 32, which faces the first crank web 31, in a case in which it is assumed that the projecting portion 38 is not formed. A portion located in the right of the virtual line 38L in FIG. 5 is the above described projecting portion 38. On the other hand, a projecting portion that projects toward the second crank web 32 is not formed in a plane of the first crank web 31, which faces the second crank web 32, and a step portion is not formed.

As illustrated in FIG. 2, a metal bearing 47 is arranged inside the hole 35 of the large end portion 27A of the connecting rod 27. The metal bearing 47 is an example of a sliding bearing and is formed of a metal cylinder. The metal bearing 47 exists between the large end portion 27A of the connecting rod 27 and the crank pin 33.

As illustrated in FIG. 5, the first shaft 41 includes a first journal portion 41A. The second shaft 42 includes a second journal portion 42A. As illustrated in FIG. 2, the first journal portion 41A is rotatably supported by the crank case 20 via the bearing 18. The second journal portion 42A is rotatably supported by the crank case 20 via the bearing 17. There is no particular limitation on types of the bearing 17 and the bearing 18 but, in this case, each of the bearing 17 and the bearing 18 is formed of a sliding bearing, such as a metal bearing or the like. However, each of the bearing 17 and the bearing 18 may be a rolling bearing, such as a ball bearing or the like.

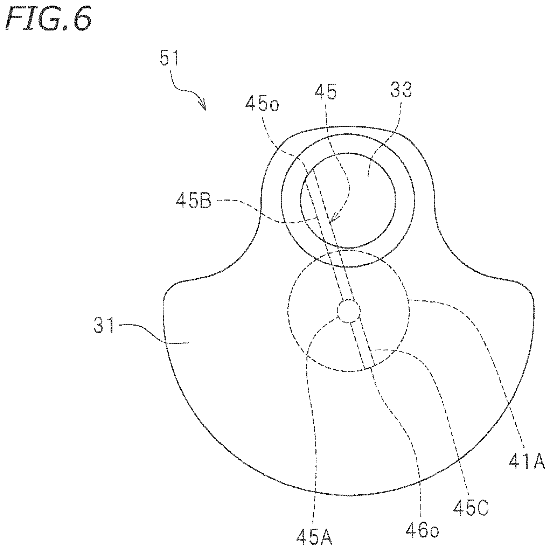

As illustrated in FIG. 5 and FIG. 6, an oil passage 45 is formed in the first part 51. The oil passage 45 includes an inlet port 45i that is formed in a tip surface of the first shaft 41, an outlet port 45o that is formed in an outer peripheral surface of the crank pin 33, and another outlet port 46o that is formed in an outer peripheral surface of the first shaft 41. As illustrated in FIG. 5, in a direction along the axis L3 of the crank pin 33, when it is assumed that a distance between a center of the outlet port 45o and the first crank web 31 is T1 and a distance between the center of the outlet port 45o and the second crank web 32 is T2, T1 = T2 is satisfied. The outlet port 45o is formed in an intermediate position of the metal bearing 47 in the direction along the axis L3.

The oil passage 45 includes a central passage 45A, an inclined passage 45B, and an inclined passage 45C. The central passage 45A extends from the inlet port 45i along the axis L1 of the first shaft 41. At least a portion of the central passage 45A is formed inside the first shaft 41. The inclined passage 45B and the inclined passage 45C are inclined with respect to the axis L1 of the first shaft 41. The inclined passage 45B connects the central passage 45A and the outlet port 45o. The inclined passage 45C connects the central passage 45A and the outlet port 46o. At least a portion of the oil passage 45 passes inside the first crank web 31 and inside the crank pin 33. In this case, the inclined passage 45B passes inside the first crank web 31 and inside the crank pin 33.

As illustrated in FIG. 5, the outlet port 45o of the oil passage 45 is arranged above the axis L1 of the first shaft 41. A portion of the inlet port 45i is located above the axis L1 but another part thereof is located under the axis L1. Therefore, when viewed in the direction that is perpendicular to the plane including the axis L3 of the crank pin 33 and the axis L1 of the first shaft 41, at least a portion of the inlet port 45i of the oil passage 45 is arranged in an opposite side to the outlet port 45o with respect to the axis L1 of the first shaft 41.

As illustrated in FIG. 2, the inlet port 45i of the oil passage 45 is opened toward an oil passage 19 that is formed in the crank case 20. The inlet port 45i is formed so as to introduce a lubricant to the oil passage 45 of the crankshaft 25 from the oil passage 19 that is formed in the crank case 20. The outlet port 45o is opened toward the metal bearing 47. The outlet port 45o is formed so as to supply the lubricant to the metal bearing 47 from the oil passage 45. The outlet port 46o is opened toward the bearing 18. The outlet port 460 is formed so as to supply the lubricant to the bearing 18 from the oil passage 45.

A portion of the lubricant that has been introduced from the inlet port 45i passes through the central passage 45A and the inclined passage 45B and is supplied to the metal bearing 47 from the outlet port 45o. The metal bearing 47 is lubricated by the lubricant. Another part of the lubricant passes the central passage 45A and the inclined passage 45C and is supplied to the bearing 18 from the outlet port 46o. The bearing 18 is lubricated by the lubricant.

As described above, in the internal-combustion engine 10 according to this embodiment, the crankshaft 25 includes the first part 51 formed by integrally forming the first crank web 31, the crank pin 33, and the first shaft 41 and the second part 52 formed by integrally forming the second crank web 32 and the second shaft 42, as illustrated in FIG. 5. The crankshaft 25 and the connecting rod 27 can be assembled by interesting the crank pin 33 of the first part 51 in the hole 35 of the large end portion 27A of the connecting rod 27 and in the pin hole 37 of the second part 52 in order. Therefore, the connecting rod 27 (see FIG. 3) with which the peripheral portion 27D of the hole 35 of the large end portion 27A is integrally formed can be used. Therefore, with the internal-combustion engine 10, it is easy to manufacture the connecting rod 27. Also, roundness of the hole 35 of the large end portion 27A can be easily ensured. Also, a size and a weight of the large end portion 27A of the connecting rod 27 can be reduced. Furthermore, the large end portion 27A is small, and therefore, a turning trail of the large end portion 27A associated with rotation of the crankshaft 25 can be made small. Therefore, a size of the internal-combustion engine 10 can be reduced.

With the internal-combustion engine 10 according to this embodiment, because the first shaft 41, the first crank web 31, and the crank pin 33 are formed as an integrated piece, the inclined passage 45B that is an oil passage that extends from the inside of the first crank web 31 to the inside of the crank pin 33 can be easily processed. According to this embodiment, furthermore, a central line of the inclined passage 45B and a central line of the inclined passage 45C match one another. Therefore, both of the inclined passage 45B and the inclined passage 45C can be easily processed.

Also, the first crank web 31 and the crank pin 33 are formed as an integrated piece, and therefore, there is no boundary between the first crank web 31 and the crank pin 33. Therefore, a necessary lubricant can be smoothly supplied to the metal bearing 47 through the inclined passage 45B.

Note that the oil passage 45 according to this embodiment includes the central passage 45A that overlaps the axis L1 of the first shaft 41 in a cross section including the axis L3 of the crank pin 33 and the axis L1 of the first shaft 41. Therefore, making the best use of a centrifugal force associated with rotation of the crankshaft 25 (in other words, rotation of the first shaft 41), a lubricant can be supplied from the central passage 45A to the outlet port 45o that is formed in the outer peripheral surface of the crank pin 33. Also by this, a sufficient amount of the lubricant can be supplied to the metal bearing 47.

As described above, with the internal-combustion engine 10 according to this embodiment, a necessary amount of the lubricant can be stably supplied to the metal bearing 47 that exists between the large end portion 27A of the connecting rod 27 and the crank pin 33. Therefore, noise caused by the bearing that exists between the large end portion 27A of the connecting rod 27 and the crank pin 33 can be reduced.

Therefore, according to this embodiment, the single-cylinder internal-combustion engine 10 that can be easily assembled and has less noise and the motorcycle 1 including the internal-combustion engine 10 can be achieved.

Also, the internal-combustion engine 10 according to this embodiment includes the metal bearing 47 as a bearing that exists between the large end portion 27A of the connecting rod 27 and the crank pin 33. The metal bearing has a characteristic that the metal bearing has less noise than that of a rolling bearing. Therefore, noise can be further reduced. In addition, the crank pin 33 that contacts the metal bearing 47 is integrally formed with the first crank web 31, and therefore, has high rigidity. The large end portion 27A of the connecting rod 27 can be stably supported via the metal bearing 47, and therefore, noise can be further reduced.

Also, according to this embodiment, as illustrated in FIG. 5, when viewed from the direction that is perpendicular to the plane including the axis L3 of the crank pin 33 and the axis L1 of the first shaft 41, at least a portion of the inlet port 45i of the oil passage 45 is arranged in an opposite side to the outlet port 45o with respect to the axis L1 of the first shaft 41. In FIG. 5, at least a portion of the inlet port 45i is arranged under the axis L1. Thus, in a radial direction of the first shaft 41, the lubricant can be introduced from a position that is relatively far from the outlet port 45o to the oil passage 45.

Also, according to this embodiment, the oil passage 45 includes the central passage 45A that extends along the axis L1 of the first shaft 41 inside the first shaft 41 and the inclined passage 45B that is inclined with respect to the axis L1 and connects the central passage 45A and the outlet port 45o. Thus, the lubricant that has been distributed along the axis L1 of the first shaft 41 can be well introduced to the outlet port 45o formed in the outer peripheral surface of the crank pin 33. Also, the central passage 45A can be easily processed, for example, by inserting a drill along the axis L1 from an end portion of the first shaft 41. The inclined passage 45B can be easily processed by inserting a drill in a direction that is oblique to the axis L1 from the outlet port 45o. Therefore, the oil passage 45 (the central passage 45A and the inclined passage 45B) through which the lubricant is supplied to the metal bearing 47 can be processed in a relatively easy manner.

According to this embodiment, the first journal portion 41A of the first shaft 41 is rotatably supported by the bearing 18 that is formed of a sliding bearing. Also by this, noise can be reduced. The oil passage 45 includes the outlet port 46o that is formed in an outer peripheral surface of the first journal portion 41A. Therefore, a necessary amount of the lubricant can be sufficiently supplied to the bearing 18. Also, according to this embodiment, the lubricant can be independently supplied from the central passage 45A to each of the bearing 18 and the metal bearing 47.

Incidentally, each of the crank webs 31, 32 is configured such that, in order to reduce an inertia force that is generated by movement of the piston 26 and the connecting rod 27, weight balance is uneven. That is, a portion of each of the crank webs 31, 32 which is far from the crank pin 33 is configured to have a larger weight than that of a portion thereof which is located closer to the crank pin 33. In order to ensure imbalance of the weight of each of the crank webs 31, 32, as illustrated in FIG. 4, a width D2 of the portion of each of the crank webs 31, 32 which is far from the crank pin 33 is larger than a width D1 of the portion of each of the crank webs 31, 32 which is closer to the crank pin 33. In this case, according to this embodiment, as illustrated in FIG. 5, when viewed from the direction that is perpendicular to the plane including the axis L1 of the first shaft 41 and the axis L3 of the crank pin 33, the projecting portion 38 that projects toward the first crank web 31 is formed in the plane of the second crank web 32, which faces the first crank web 31. Therefore, necessary imbalance can be ensured while the width D2 is reduced. Accordingly, a size of the crankshaft 25 can be reduced and, furthermore, a size of the internal-combustion engine 10 can be reduced.

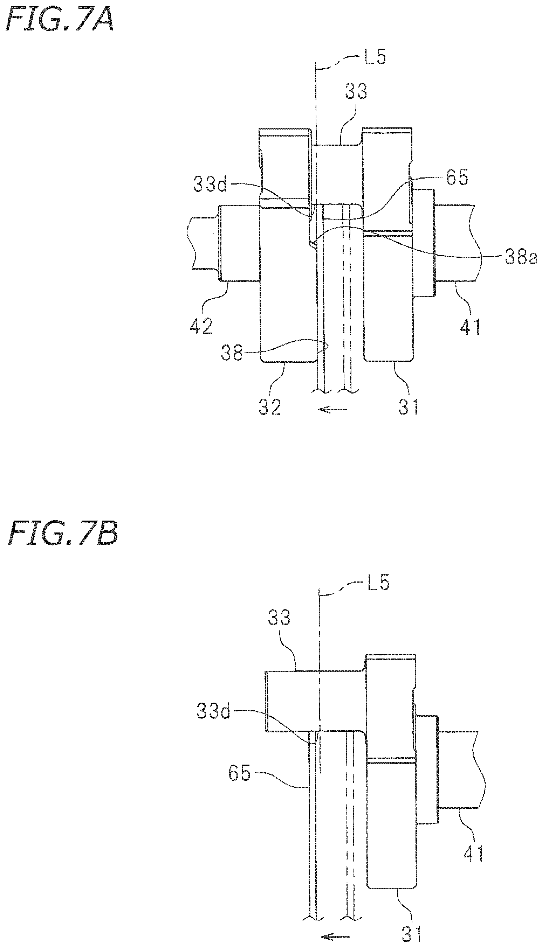

Incidentally, roundness is required for the crank pin 33, and therefore, polishing processing is performed on the crank pin 33. As illustrated in FIG. 7A, if, when the crank pin 33 and both of the crank webs 31, 32 are integrally formed as one piece, the projecting portion 38 is formed in the second crank web 32, a tool 65 that is used for polishing processing cannot be moved to a side that is closer to the second crank web 32 than the projecting portion 38. That is, in FIG. 7A, the tool 65 cannot be moved to a left side of a straight line L5. Therefore, the tool 65 cannot be applied to a portion 33d of the crank pin 33 which is in a vicinity of the second crank web 32, and therefore, the crank pin 33 cannot be well polished.

On the other hand, according to this embodiment, as illustrated in FIG. 7B, the crank pin 33 is a separate body from the second crank web 32, and therefore, the tool 65 can be moved to the left side of the straight line L5 without being interrupted by the projecting portion 38 of the second crank web 32. The tool 65 can be applied also to the portion 33d of the crank pin 33 and the crank pin 33 can be well polished. Note that the projecting portion 38 is not formed in the first crank web 31. Therefore, the tool 65 can be well applied also to a portion of the crank pin 33 which is in a vicinity of the first crank web 31. Therefore, according to this embodiment, the crank pin 33 can be well polished and also the size of the crankshaft 25 can be reduced.

In a case in which the large end portion 27A of the connecting rod 27 is formed of a plurality of parts, it is necessary to provide a bolt that connects the parts in the peripheral portion 27D of the hole 35 of the large end portion 27A. Therefore, a size of the peripheral portion 27D of the hole 35 is increased. However, according to this embodiment, as illustrated in FIG. 3, the peripheral portion 27D of the hole 35 of the large end portion 27A of the connecting rod 27 is integrally formed, and therefore, it is not necessary to increase the size of the peripheral portion 27D for providing a bolt. The size of the peripheral portion 27D of the hole 35 of the large end portion 27A can be reduced. Thus, even when the relatively large projecting portion 38 is provided in the second crank web 32, there is no risk that the projecting portion 38 of the second crank web 32 and the peripheral portion 27D of the hole 35 of the large end portion 27A of the connecting rod 27 interference with one another when the crankshaft 25 rotates.

### (Second Embodiment that illustrates the entire combination of the features of the independent claim)

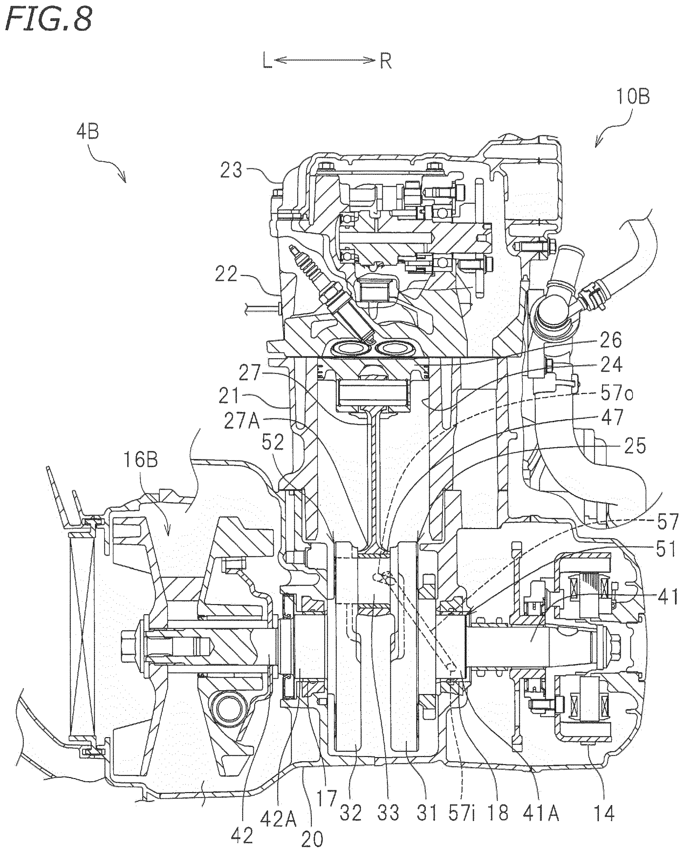

A motorcycle 1 according to a second embodiment is a motorcycle obtained by changing the above described power unit 4 to a power unit 4B illustrated in FIG. 8. Note that a type of the motorcycle 1 may be changed in accordance with change to the power unit 4B. For example, the motorcycle 1 may be a scooter. However, there is no particular limitation to the type of the motorcycle 1. In the following description, each of similar members and parts to those in the first embodiment is denoted by the same reference sign as that of the corresponding one of the members and parts in the first embodiment and description thereof will be omitted.

The power unit 4B according to the second embodiment includes a V-belt type continuously variable transmission (which will be hereinafter referred to as a CVT) 16B as a transmission. The CVT 16B is connected to a second shaft 42 of a crankshaft 25. The CVT 16B is directly connected to the second shaft 42. A generator 14 is directly connected to a first shaft 41.

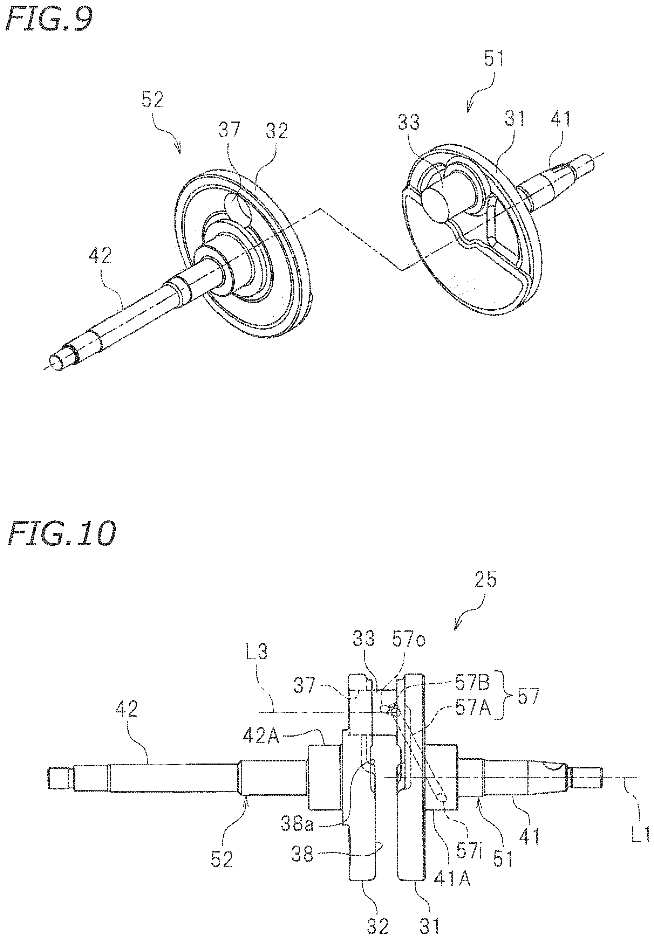

Also in this embodiment, the crankshaft 25 includes a first part 51 including a first shaft 41, a first crank web 31, and a crank pin 33 and a second part 52 including a second shaft 42 and a second crank web 32 (see FIG. 9). Each of the first part 51 and the second part 52 is a single part that has been integrally formed. The first shaft 41, the first crank web 31, and the crank pin 33 are integrally formed. The second shaft 42 and the second crank web 32 are integrally formed. As illustrated in FIG. 10, the first part 51 and the second part 52 are assembled by pressing the crank pin 33 of the first part 51 into a pin hole 37 of the second part 52. Note that a shape of the crankshaft 25 is slightly different between FIG. 8 and FIG. 10, but the crankshaft 25 has substantially the same shape (a balancer gear is omitted in FIG. 10 or the like).

Also in this embodiment, a projecting portion 38 that projects toward the first crank web 31 is formed in a plane of the second crank web 32, which faces the first crank web 31.

As illustrated in FIG. 8, a metal bearing 47 that is an example of a sliding bearing is arranged between a large end portion 27A of a connecting rod 27 and the crank pin 33.

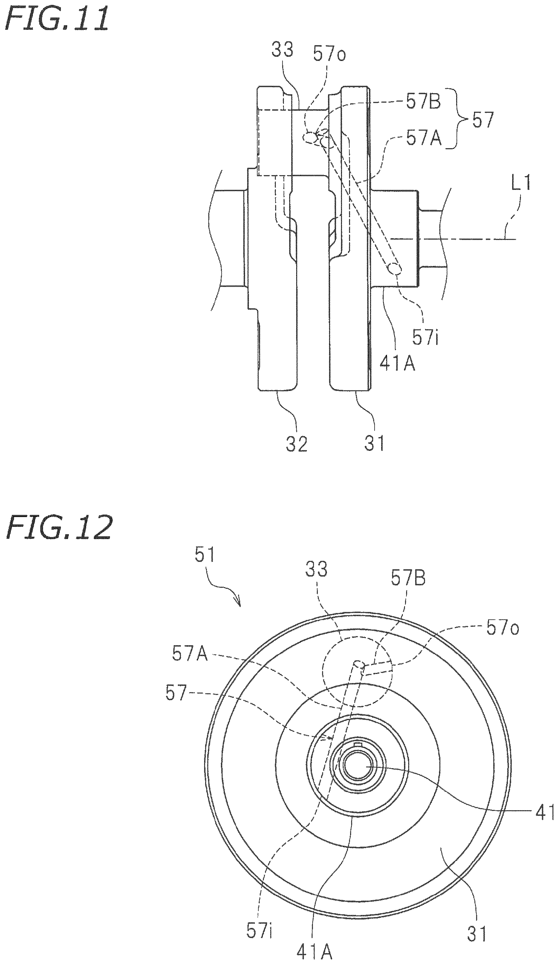

As illustrated in FIG. 10 and FIG. 12, an oil passage 57 is formed in the first part 51. The oil passage 57 includes an inlet port 57i that is formed in an outer peripheral surface of a first journal portion 41A of the first shaft 41 and an outlet port 57o that is formed in an outer peripheral surface of the crank pin 33. Also in this embodiment, the outlet port 57o is formed in an intermediate position of the metal bearing 47 in a direction along the axis L3.

In this embodiment, as illustrated in FIG. 11 and FIG. 12, the oil passage 57 includes a first inclined passage 57A and a second inclined passage 57B. Each of the first inclined passage 57A and the second inclined passage 57B is a straight passage. As illustrated in FIG. 11, the first inclined passage 57A extends from the inlet port 57i in a direction that is inclined with respect to the axis L1 of the first shaft 41. The second inclined passage 57B is inclined with respect to the first inclined passage 57A and connects the first inclined passage 57A and the outlet port 57o to one another. The first inclined passage 57A passes inside the journal portion 41A of the first shaft 41, inside the first crank web 31, and inside the crank pin 33. The second inclined passage 57B is formed in the crank pin 33 and the second inclined passage 57B is shorter than the first inclined passage 57A.

As illustrated in FIG. 10, when viewed from a direction that is perpendicular to a plane including the axis L3 of the crank pin 33 and the axis L1 of the first shaft 41, the first inclined passage 57A has a passage portion that overlaps the axis L1. In FIG. 10, the inlet port 57i is arranged under the axis L1 and the outlet port 57o is arranged above the axis L1. The inlet port 57i is arranged in an opposite side to the outlet port 57o with respect to the axis L1.

Although not illustrated in the drawings, another oil passage through which a lubricant is supplied to a bearing 18 is formed in a crank case 20 of this embodiment. The lubricant that has flowed in the oil passage is supplied to the bearing 18 and, thereafter, flows in the first inclined passage 57A of the oil passage 57 from the inlet port 57i. The lubricant that has flowed in the first inclined passage 57A is distributed to the first inclined passage 57A and the second inclined passage 57B and flows out from the outlet port 57o. Thus, the lubricant is supplied to the metal bearing 47.

Also in this embodiment, a single-cylinder internal-combustion engine 10B that can be easily assembled and has less noise and the motorcycle 1 including the internal-combustion engine 10B can be achieved.

In this embodiment, the inlet port 57i of the oil passage 57 is formed in the outer peripheral surface of the first shaft 41. Unlike the first embodiment, it is not needed to provide an inlet port of an oil passage in a tip surface of the first shaft 41. Also, it is not needed to provide a central passage that extends along the axis L1 inside the first shaft 41.

It is also possible to form the inlet port 57i in an outer peripheral surface of some other portion of the first shaft 41 than the first journal portion 41A, but in this embodiment, the inlet port 57i is formed in the outer peripheral surface of the first journal portion 41A. Therefore, the lubricant can be supplied to the bearing 18 and the metal bearing 47 in order.

Also in this embodiment, the outlet port 57o of the oil passage 57 is formed in the intermediate position of the metal bearing 47 in the direction along the axis L3 of the crank pin 33. Therefore, the lubricant can be stably supplied to the entire metal bearing 47. On the other hand, it is difficult to straightly connect the inlet port 57i and the outlet port 57o to one another by a single inclined passage. However, according to this embodiment, the oil passage 57 includes the first inclined passage 57A and the second inclined passage 57B that is inclined with respect to the first inclined passage 57A. Therefore, the inlet port 57i and the outlet port 57o can be well connected. Therefore, the lubricant can be stably supplied to the metal bearing 47.

### (Other Embodiments)

Two preferred embodiments of the present teaching have been described above, but each of the above described preferred embodiments is merely an illustrative example. Next, other embodiments will be simply described.

In each of the above described preferred embodiments, the internal-combustion engine 10, 10B may be formed so as to be bilateral symmetry. The first part 51 may be arranged in a left side of the second part 52.

In the first embodiment, the inclined passage 45B is a single straight passage. However, the inclined passage 45B may include a first inclined passage and a second inclined passage that is inclined with respect to the first inclined passage.

In the second embodiment, the oil passage 57 includes two inclined passages 57A, 57B that have different inclination angles with respect to the axis L1. However, as long as the inlet port 57i and the outlet port 57o can be connected to one another, the oil passage 57 may be formed of a single straight inclined passage.

The bearing that exists between the large end portion 27A of the connecting rod 27 and the crank pin 33 is not limited to a sliding bearing and may be a rolling bearing, such as a needle bearing or the like.

In the above described preferred embodiments, a straddled vehicle is the motorcycle 1. However, a straddled vehicle is a vehicle on which a rider rises straddling thereon and is not limited to the motorcycle 1. A straddled vehicle may be a motor tricycle, an all-terrain vehicle (ATV), or the like.

An internal-combustion engine is not limited to a four-cycle engine and may be a two-cycle engine.

### Reference Signs List

1...Motorcycle (straddled vehicle), 25... Crankshaft, 27...Connecting rod, 27A... Large end portion, 27D...Peripheral portion, 31...First crank web, 32...Second crank web, 33...Crank pin, 35... Hole, 37...Pin hole, 41...First shaft, 42...Second shaft, 45...Oil passage, 45i...Inlet port of oil passage, 45o...Outlet port of oil passage, 47...Metal bearing (sliding bearing), 51...First part, 52...Second part, 57...Oil passage, 57i...Inlet port of oil passage, 570...Outlet port of oil passage, L1...Axis of first shaft, L3...Axis of crank pin

## Claims

1. A single-cylinder internal-combustion engine (10B) comprising:
a crankshaft (25) including a first part (51) formed by integrally forming a first crank web (31), a crank pin (33) that extends from the first crank web (31), and a first shaft (41) that is arranged in an opposite side to the crank pin (33) with respect to the first crank web (31) and extends from the first crank web (31), and
a second part (52) formed by integrally forming a second crank web (32) in which a pin hole (37) in which the crank pin (33) of the first part (51) is pressed is formed, and a second shaft (42) that is arranged in an opposite side to the first crank web (31) with respect to the second crank web (32) and extends from the second crank web (32),
wherein, in the first part (51), an oil passage (57) that passes inside the crank pin (33) and inside the first crank web (31) and has an outlet port (57o) and an inlet port (57i) is formed, the oil passage (57) is formed of an inclined passage that is inclined with respect to the axis (L1) of the first shaft (41),
when viewed from a direction that is perpendicular to a plane including an axis (L3) of the crank pin (33) and an axis (L1) of the first shaft (41), the oil passage (57) has a passage portion that overlaps the axis (L1) of the first shaft (41), and
the single-cylinder internal-combustion engine (10B) includes
a connecting rod (27) which has a large end portion (27A) in which a hole (35) in which the crank pin (33) is inserted is formed and in which at least a peripheral portion (27D) of the hole (35) of the large end portion (27A) is integrally formed, and
a bearing (47) that is arranged inside the hole (35) of the large end portion (27A) of the connecting rod (27) and exists between the large end portion (27A) of the connecting rod (27) and the crank pin (33), the bearing (47) is a sliding bearing, wherein the first shaft (41) includes a journal portion (41A),
the internal-combustion engine includes another sliding bearing (18) that rotatably supports the journal portion (41A), **characterized in that**
the oil passage (57)
that passes inside the crank pin (33) and inside the first crank web (31) and has the outlet port (57o) formed in an outer peripheral surface of the crank pin (33), wherein the inlet port (57i) of the oil passage (57) is formed in an outer peripheral surface of the first shaft (41), and
the inlet port (57i) of the oil passage (57) is formed in the outer peripheral surface of the journal portion (41).

2. The single-cylinder internal-combustion engine (10B) according to claim 1, **characterized in that,** when viewed from the direction that is perpendicular to the plane including the axis (L3) of the crank pin (33) and the axis (L1) of the first shaft (41), the oil passage (57) has an inlet port (57i) at least a portion of which is arranged in an opposite side to the outlet port (57o) with respect to the axis (L1) of the first shaft (41).

3. The single-cylinder internal-combustion engine (10B) according to claim 1 or 2, **characterized in that** the outlet port (57o) of the oil passage (57) is formed in the crank pin (33) and is located in an intermediate position of the bearing (47) in a direction along the axis (L3) of the crank pin (33), and
the inclined passage (57) includes a first inclined passage (57A) and a second inclined passage (57B) that is inclined with respect to the first inclined passage (57A).

4. The single-cylinder internal-combustion engine (10B) according to any one of claims 1 to 3, **characterized in that,** when viewed from the direction that is perpendicular to the plane including the axis (L1) of the first shaft (41) and the axis (L3) of the crank pin (33), a projecting portion (38) that projects toward the first crank web (31) is formed in a position that is distant from the crank pin (33) in a plane of the second crank web (32), which faces the first crank web (31).

5. A straddled vehicle (1) comprising:
the single-cylinder internal-combustion engine (10B) according to any one of claims 1 to 4.

6. The straddled vehicle (1) according to claim 5 further comprising:
a transmission (16) connected to the first shaft (41).

7. The straddled vehicle (1) according to claim 5 further comprising:
a generator (14) connected to the first shaft (41).

8. The straddled vehicle (1) according to claim 5 further comprising:
a belt type continuously variable transmission (16B) connected to the second shaft (42).

## Patentansprüche

1. Eine Einzylinder-Verbrennungs-Kraftmaschine (10B), die umfasst:
eine Kurbel-Welle (25), die beinhaltet, einen ersten Teil (51), der durch einstückiges Ausbilden einer ersten Kurbel-Wange (31) gebildet ist, einen Kurbel-Zapfen (33), der sich von der ersten Kurbel-Wange (31) erstreckt, und eine erste Welle (41), die in einer gegenüberliegenden Seite zu dem Kurbel-Zapfen (33) in Bezug auf die erste Kurbel-Wange (31) angeordnet ist und sich von der ersten Kurbel-Wange (31) erstreckt, und
einen zweiten Teil (52), der durch einstückiges Ausbilden einer zweiten Kurbel-Wange (32) gebildet ist, in der ein Zapfenloch (37) ausgebildet ist, in das der Kurbel-Zapfen (33) des ersten Teils (51) eingepresst ist, und eine zweite Welle (42), die die in einer gegenüberliegenden Seite zu der ersten Kurbel-Wange (31) in Bezug auf die zweite Kurbel-Wange (32) angeordnet ist und sich von der zweiten Kurbel-Wange (32) erstreckt,
wobei in dem ersten Teil (51) ein Öl-Durchgang (57), der innerhalb des Kurbel-Zapfens (33) und innerhalb der ersten Kurbel-Wange (31) verläuft und einen Auslass-Anschluss (57o) und einen Einlass-Anschluss (57i) hat, ausgebildet ist, der Öl-Durchgang (57) ist von einem geneigten Durchgang gebildet, der in Bezug auf die Achse (L1) der ersten Welle (41) geneigt ist,
bei Betrachtung aus einer Richtung, die senkrecht zu einer Ebene ist, die eine Achse (L3) des Kurbel-Zapfens (33) und eine Achse (L1) der ersten Welle (41) enthält, hat der Öl-Durchgang (57) einen Durchgangs-Abschnitt, der die Achse (L1) der ersten Welle (41) überlappt, und
die Einzylinder-Verbrennungs-Kraftmaschine (10B) beinhaltet
eine Verbindungs-Stange (27), die einen großen Endabschnitt (27A) hat, in dem ein Loch (35), in das der Kurbel-Zapfen (33) eingesetzt ist, ausgebildet ist und in dem zumindest ein Umfangsabschnitt (27D) des Lochs (35) des großen Endabschnitts (27A) einstückig ausgebildet ist, und
ein Lager (47), das innerhalb des Lochs (35) des großen Endabschnitts (27A) der Verbindungs-Stange (27) angeordnet ist und zwischen dem großen Endabschnitt (27A) der Verbindungs-Stange (27) und dem Kurbel-Zapfen (33) besteht, das Lager (47) ist ein Gleit-Lager, wobei die erste Welle (41) einen Trag-Abschnitt (41A) beinhaltet,
die Verbrennungs-Kraftmaschine ein anderes Gleit-Lager (18) enthält, das den Trag-Abschnitt (41A) drehbar lagert, **dadurch gekennzeichnet, dass** der Öl-Durchgang (57), der innerhalb des Kurbel-Zapfens (33) und innerhalb der ersten Kurbel-Wange (31) verläuft und den Auslass-Anschluss (57o) hat, der in einer Außen-Umfangs-Fläche des Kurbel-Zapfens (33) ausgebildet ist, wobei der Einlass-Anschluss (57i) des Öl-Durchgangs (57) in einer Außen-Umfangs-Fläche der ersten Welle (41) ausgebildet ist, und
der Einlass-Anschluss (57i) des Öl-Durchgangs (57) in der Außen-Umfangs-Fläche des Trag-Abschnitts (41) ausgebildet ist.

2. Die Einzylinder-Verbrennungs-Kraftmaschine (10B) gemäß Anspruch 1, **dadurch gekennzeichnet, dass** bei Betrachtung aus einer Richtung, die senkrecht zu einer Ebene ist, die eine Achse (L3) des Kurbel-Zapfens (33) und eine Achse (L1) der ersten Welle (41) enthält, der Öl-Durchgang (57) einen Einlass-Anschluss (57i) hat, von der zumindest ein Teil in einer gegenüberliegenden Seite zu dem Auslass-Anschluss (57o) in Bezug auf die Achse (L1) der ersten Welle (41) angeordnet ist.

3. Die Einzylinder-Verbrennungs-Kraftmaschine (10B) gemäß Anspruch 1 oder 2, **dadurch gekennzeichnet, dass** der Auslass-Anschluss (57o) von dem Öl-Durchgang (57) in dem Kurbel-Zapfen (33) ausgebildet ist und sich in einer Zwischenposition des Lagers (47) in einer Richtung entlang der Achse (L3) des Kurbel-Zapfens (33) befindet, und
der geneigte Durchgang (57) einen ersten geneigten Durchgang (57A) und einen zweiten geneigten Durchgang (57B), der in Bezug auf den ersten geneigten Durchgang (57A) geneigt ist, beinhaltet.

4. Die Einzylinder-Verbrennungs-Kraftmaschine (10B) gemäß einem der Ansprüche 1 bis 3, **dadurch gekennzeichnet, dass** bei Betrachtung aus einer Richtung, die senkrecht zu einer Ebene ist, die eine Achse (L3) des Kurbel-Zapfens (33) und eine Achse (L1) der ersten Welle (41) enthält, ein Vorsprungs-Abschnitt (38), der zu der ersten Kurbel-Wange (31) hin vorspringt an einer Stelle ausgebildet ist, die von dem Kurbel-Zapfen (33) in einer Ebene der zweiten Kurbel-Wange (32) beabstandet ist, die der ersten Kurbel-Wange (31) zugewandt ist.

5. Ein Spreiz-Sitz-Fahrzeug (1), das umfasst:
die Einzylinder-Verbrennungs-Kraftmaschine (10B) gemäß einem der Ansprüche 1 bis 4.

6. Das Spreiz-Sitz-Fahrzeug (1) gemäß Anspruch 5, das weiter umfasst:
ein Getriebe (16), das mit der ersten Welle (41) verbunden ist.

7. Das Spreiz-Sitz-Fahrzeug (1) gemäß Anspruch 5, das weiter umfasst:
einen Generator (14), der mit der ersten Welle (41) verbunden ist.

8. Das Spreiz-Sitz-Fahrzeug (1) gemäß Anspruch 5, das weiter umfasst:
ein Riemen-Typ-Stufenlos-Variable-Getriebe (16B), das mit der zweiten Welle (42) verbunden ist.

## Revendications

1. Moteur à combustion interne monocylindre (10B) comprenant :
un vilebrequin (25) comprenant une première partie (51) formée en formant d'un seul tenant un premier bras de manivelle (31), un maneton (33) qui s'étend depuis le premier bras de manivelle (31), et un premier arbre (41) qui est disposé dans un côté opposé au maneton (33) par rapport au premier bras de manivelle (31) et s'étend depuis le premier bras de manivelle (31), et
une seconde partie (52) formée en formant d'un seul tenant un second bras de manivelle (32) dans lequel est formé un trou de maneton (37) dans lequel le maneton (33) de la première partie (51) est pressé, et un second arbre (42) qui est disposé dans un côté opposé au premier bras de manivelle (31) par rapport au second bras de manivelle (32) et s'étend depuis le second bras de manivelle (32),
dans lequel, dans la première partie (51), un passage d'huile (57) qui passe à l'intérieur du maneton (33) et à l'intérieur du premier bras de manivelle (31) et qui a un orifice de sortie (57o) et un orifice d'entrée (57i) est formé, le passage d'huile (57) est formé d'un passage incliné qui est incliné par rapport à l'axe (L1) du premier arbre (41),
lorsqu'observé depuis une direction qui est perpendiculaire à un plan comprenant un axe (L3) du maneton (33) et un axe (L1) du premier arbre (41), le passage d'huile (57) a une partie de passage qui chevauche l'axe (L1) du premier arbre (41), et
le moteur à combustion interne monocylindre (10B) comprend
une bielle (27) qui a une grande partie d'extrémité (27A) dans laquelle est formé un trou (35) dans lequel le maneton (33) est inséré et dans lequel au moins une partie périphérique (27D) du trou (35) de la grande partie d'extrémité (27A) est formée d'un seul tenant, et
un palier (47) qui est disposé à l'intérieur du trou (35) de la grande partie d'extrémité (27A) de la bielle (27) et existe entre la grande partie d'extrémité (27A) de la bielle (27) et le maneton (33), le palier (47) est un palier glissant, dans lequel le premier arbre (41) comprend une portion de tourillon (41A),
le moteur à combustion interne comprend un autre palier glissant (18) qui supporte en rotation la partie de tourillon (41A), **caractérisé en ce que**
le passage d'huile (57) passe à l'intérieur du maneton (33) et à l'intérieur du premier bras de manivelle (31) et présente l'orifice de sortie (57o) formé dans une surface périphérique extérieure du maneton (33), dans lequel l'orifice d'entrée (57i) du passage d'huile (57) est formé dans une surface périphérique extérieure du premier arbre (41), et
l'orifice d'entrée (57i) du passage d'huile (57) est formé dans la surface périphérique extérieure de la partie de tourillon (41).

2. Moteur à combustion interne monocylindre (10B) selon la revendication 1, **caractérisé en ce que**, lorsqu'observé depuis la direction qui est perpendiculaire au plan comprenant l'axe (L3) du maneton (33) et l'axe (L1) du premier arbre (41), le passage d'huile (57) présente un orifice d'entrée (57i) dont au moins une partie est disposée dans un côté opposé à l'orifice de sortie (57o) par rapport à l'axe (L1) du premier arbre (41).

3. Moteur à combustion interne monocylindre (10B) selon la revendication 1 ou 2, **caractérisé en ce que** l'orifice de sortie (57o) du passage d'huile (57) est formé dans le maneton (33) et est situé dans un position intermédiaire du palier (47) dans une direction le long de l'axe (L3) du maneton (33), et
le passage incliné (57) comprend un premier passage incliné (57A) et un second passage incliné (57B) qui est incliné par rapport au premier passage incliné (57A).

4. Moteur à combustion interne monocylindre (10B) selon l'une quelconque des revendications 1 à 3, **caractérisé en ce que**, lorsqu'observé depuis la direction qui est perpendiculaire au plan comprenant l'axe (L1) du premier arbre (41) et l'axe (L3) du maneton (33), une partie en saillie (38) qui fait saillie vers le premier bras de manivelle (31) est formée dans une position qui est éloignée du maneton (33) dans un plan du second bras de manivelle (32), qui fait face au premier bras de manivelle (31).

5. Véhicule à enfourcher (1) comprenant :
le moteur à combustion interne monocylindre (10B) selon l'une quelconque des revendications 1 à 4.

6. Véhicule à enfourcher (1) selon la revendication 5, comprenant en outre :
une transmission (16) reliée au premier arbre (41).

7. Véhicule à enfourcher (1) selon la revendication 5, comprenant en outre :
un générateur (14) relié au premier arbre (41).

8. Véhicule à enfourcher (1) selon la revendication 5, comprenant en outre :
une transmission à variation continue de type courroie (16B) reliée au second arbre (42).
